# FASCICULE DE BREVET EUROPEEN

(11) **EP 0 827 487 B1**
(45) Date de publication et mention de la délivrance du brevet: **05.04.2000**
(21) Numéro de dépôt: 96902329.0
(22) Date de dépôt: 02.02.1996
(51) Int. Cl.: C01D 3/08, C01F 5/30, C01D 5/00, C01D 7/00, C01B 35/12, C01F 5/40

(54) **PROCEDE D'OBTENTION DE SEL, NOTAMMENT DE CHLORURE DE POTASSIUM, PAR LIXIVIATION ET REFROIDISSEMENT DE LA SOLUTION**
VERFAHREN ZUR GEWINNUNG EINES SALZES, INSBESONDERE KALIUMCHLORID, DURCH AUSLAUGEN UND ABKÜHLUNG DER LÖSUNG
METHOD FOR PREPARING A SALT, PARTICULARLY POTASSIUM CHLORIDE, BY LEACHING AND COOLING A SOLUTION THEREOF

(30) Priorité: 16.02.1995 FR 9501787
(43) Date de publication de la demande: 11.03.1998
(73) Titulaire: Mahue, Bernard, 75015 Paris (FR)
(72) Inventeur: Mahue, Bernard, 75015 Paris (FR)
(86) Numéro de dépôt international: FR9600178
(87) Numéro de publication internationale: WO9625360

(56) Documents cités:
- EP-A- 0 199 617
- FR-A- 1 570 444
- GB-A- 2 040 903
- US-A- 3 994 531
- US-A- 4 334 885
- DATABASE WPI Week 8132 Derwent Publications Ltd., London, GB; AN 57548 XP002003167 & JP,A,56 073 620 (NIPPON CHEMICAL PLANT) , 18 Juin 1981

## Description

L'invention concerne un nouveau procédé d'obtention de sel, notamment de chlorure de potassium KCl, mais également entre autres, NaCl, Na₂SO₄, Na₂CO₃, Na₂B₄O₇, MgCl₂, MgSO₄, K₂SO₄, par lixiviation en place et séparation économique de ces sels purs, sans aucun rejet.

La quasi-totalité de la potasse produite dans le monde l'est par exploitation minière conventionnelle avec, pour obtenir une tonne de potasse commerciale, l'extraction au fond, le transport en surface et le traitement de 4 à 5 tonnes de tout-venant, la séparation et la mise en décharge d'environ 1 tonne d'argiles et de shistes "salés" et la mise direct dans les fleuves avoisinnants de 2 à 3 tonnes de sel.

Cette méthode minière traditionnelle se caractérise par:
1 - des dépenses très importantes de travaux préparatoires au fond de la mine et d'entretien de ces travaux,
2 - des dépenses d'extraction au fond et de transport à la surface également très importantes ramenées à la tonne commerciale, et du fait des conditions particulières à ces mines où la température très élevée impose un aérage continu très coûteux,
3 - des dépenses encore très importantes de séparation de la potasse. Bien qu'une amélioration ait été apportée par la méthode de traitement par flottation, ces nouvelles installations demandant de forts investissements n'ont pas supplanté toutes les anciennes installations basées sur le procédé thermique, particulièrement vorace en énergie, qui consiste à lixivier le tout-venant, amené sec et refroidi en surface, par une liqueur saturée en NaCl chauffée à 95-100°C.
4 - des frais actuels et à venir pour la gestion et le "dessalement" ou autre traitement des décharges, la remise en état des nappes phréatiques, la limitation de la salinité des rivières et fleuves environnants,....en résumé, pour la dépollution et la réparation des dégats,
5 - une récupération des tonnages de parties de gisement préparées de seulement de l'ordre de 80 à 85%, ces parties préparées convenant à la méthode ou aux matériels souvent très spécifiques utilisés ne représentant pas plus des 3/4 des réserves en place déclarées exploitables. Et, compte tenu du rendement au traitement, c'est finalement au plus 70% du KCl qui est récupéré sur la partie de gisement exploitée,
6 - une impossibilité d'exploiter les couches fortement pentées et toutes les couches à plus de 1000 m environ de profondeur, soit le plus souvent la majeure partie des réserves en place. Pour éviter ce bilan énergétique, financier et écologique catastrophique, lequel peut même être pire si les couches ne contiennent pas seulement de la sylvinite, mais également d'autres sels complexes, des méthodes de lixiviation en place ont été étudiées et ont donné matière à quelques brevets.

Ces méthodes sont des variantes très proches de la méthode courante adoptée pour la production de sel à partir de couches épaisses de NaCl, en ce sens qu'elles prévoient l'injection d'eau ou de solutions très légèrement salées, et la remontée d'une saumure saturée dont on essaye de retirer la totalité des sels dans des évaporateurs (cristallizers) qui, même lorsqu'ils sont à plusieurs effets, consomment beaucoup d'énergie. L'utilisation des procédés thermiques ou de la flottation pour séparer les sels comme dans les exploitations conventionnelles de tout-venant solide réduit beaucoup l'avantage de gain de ces méthodes de lixiviation vis à vis de ces exploitations.

De plus, ces méthodes classiques de lixiviation sont prévues pour fonctionner dans des couches relativement épaisses, ce qui est commun pour le sel, mais rare pour la potasse, et les autres sels en général, ou dans des configurations particulières avec un toit constitué d'une couche insoluble ou avec des couches relativement planes de façon à pouvoir utiliser une protection par fluide inerte au toit.

En conclusion, il n'existe pas à ce jour de méthode d'exploitation économique et écologique pour la plus grande partie des gisements de potasse existants.

L'objectif du présent procédé est d'exploiter avec un résultat économique satisfaisant et sans aucune atteinte à l'environnement tous les gisements de potasse, et notamment la plupart des réserves laissées en place par l'exploitation conventionnelle de la potasse sur les gisements où elle a lieu, et qui peuvent représenter de 3 à 10 fois les réserves exploitées, quelle que soit leur configuration, et notamment leur profondeur, leur pendage, l'épaisseur des couches potassiques et la nature des couches encaissantes. Le présent procédé réalise cet objectif en permettant de:
1 - réduire le coût des travaux préparatoires et de leur entretien,
2 - réduire très fortement le coût d'extraction et de transport à la surface:
   . en se limitant à extraire les produits commercialisables
   . en laissant en place au fond les insolubles (argiles, shistes) et le sel NaCl impur,
   . en éliminant toutes les dépenses d'aérage et de sécurité,
3 - pratiquement éliminer les dépenses de traitement,
   . en profitant de la chaleur existante au fond, plutôt qu'en dépensant beaucoup pour l'éliminer au fond (aérage,..) et encore plus pour la reproduire ensuite en surface,
   . en éliminant toute opération de séparation de la potasse du sel, et toute opération secondaire de séparation du sel et des insolubles,
4 - éliminer purement et simplement toute mise en décharge d'insolubles en surface et tout rejet de sel dans les fleuves environnants, et toutes dépenses à venir pour régénérer l'environnement,
5 - extraire la totalité du tonnage de KCl existant dans la couche quelle que soit son épaisseur, et ses variations d'épaisseur et de continuité, et le commercialiser dans son intégralité,
6 - exploiter toutes les zones où une couche existe quelle que soit sa profondeur et son pendage, et notamment toutes les réserves inexploitables par les méthodes minières conventionnelles,
   mais aussi, et en plus:
7 - récupérer, en "sous-produit", du sel NaCl pur, qui, exploité exclusivement pour lui-même, dans un gisement de sel "ignigène", demande:
   . beaucoup d'énergie, plus de 400 thermies par tonne de NaCl cristallisé même avec le procédé ayant aujourd'hui le meilleur rendement énergétique, la combinaison de l'évaporation à multiple effet et la thermocompression,
   . une épuration chimique pour l'utilisation dans les nouvelles cellules d'électrolyse à membrane, qui, sous la pression écologique, remplacent les anciennes cellules à diaphragme et à mercure.
On peut aussi récupérer le NaCl à 78% cristallisé dans une saumure saturée contenant les 22% restants. Avec le NaCl sous cette forme plutôt que tout en solution, on n'a plus besoin de transporter que le 1/3 du volume par pipe entre l'exploitation et l'usine, ce qui constitue une économie de transport, mais aussi d'eau, dont la difficulté d'approvisionnement ou le coût, et plus encore son élimination postérieure, surtout lorsqu'elle contient encore une partie du sel, sont souvent des paramètres très contraignants.

Finalement, le bilan énergétique, et économique global, est nettement favorable au présent procédé pour exploiter un gisement de NaCl. Il est a fortiori encore beaucoup plus favorable lorsque le NaCl est recueilli en "sous-produit" d'une exploitation de potasse ou d'autres sels.
8 - valoriser la chaleur du fond, plutôt que de lutter contre elle à grands frais d'aérage, en récupérant de l'énergie thermique, non seulement pour réduire au minimum les dépenses énergétiques pour cette exploitation, mais pour utiliser le restant, qui représente une quantité considérable, pour le chauffage d'immeubles et autres besoins industriels et agricoles,
9 - valoriser les cavités régulières crées par l'extraction en les utilisant comme moyen de stockage souterrain de produits gazeux, liquides ou solides, et notamment de déchets ultimes, les sites de stockage de ce type en surface demandant un investissement conséquent et étant de moins en moins disponibles, car systématiquement refusés par les riverains, et de ce fait, de plus en plus coûteux. En effet, ce procédé a l'avantage de former des cavités beaucoup plus régulières et moins sujettes aux mouvements de terrains et accidents pouvant causer la perte des puits que la lixiviation à l'eau douce qui a tendance à créer des cavités très hautes autour de chaque puits reliées par d'étroits canaux. Cela a pour conséquence également de réaliser une exploitation beaucoup plus importante et complète de la couche entre les puits et donc de réduire les coûts d'investissement en allongeant la durée d'amortissement des doublets, et de maintenir ouvertes et en état de produire les cavités profondes que le fluage du sel à grande profondeur a tendance à refermer.

Ces 3 valorisations, ici présentées comme effets et résultats secondaires sans coûts supplémentaires, sont des opérations qui, pratiquées dans leur seul but, requièrent, chacune, au moins autant que l'ensemble des frais encourus dans ce procédé. On peut donc, sans peine, constater que ce procédé, est, de fait, une opération industrielle qui, à elle seule, cumule les chiffres d'affaires de quatre activités pour les frais d'exploitation de pratiquement une seule d'entre elles.

On pourra remarquer également que l'exploitation des sels, et notamment de la potasse, au lieu d'être une opération minière des plus polluantes existantes à ce jour, est transformée par ce procédé en une opération non seulement à pollution zéro, mais qui, en plus, contribue à la sauvegarde de l'environnement.

Ce procédé, qui utilise moins d'eau et produit plus d'énergie qu'il n'en consomme, permet d'exploiter avec profit des gisements dans des pays où l'énergie est chère et dans des zones dépouvues d'eau et de sources d'énergie ou de moyens suffisants de distribution.

Le procédé consiste en la lixiviation d'une formation salifère contenant un sel choisi notamment parmi KCl, NaCl, Na₂SO₄, Na₂CO₃, Na₂B₄O₇, MgCl₂, MgSO₄, K₂SO₄ ou leurs mélanges, caractérisé en ce qu'il consiste à injecter une solution de ce sel dans un puits ménagé dans la formation et à en éjecter une solution saturée par un autre puits ménagé dans la formation, ces 2 puits étant reliés par des méthodes connues, et préférentiellement par fracturation hydraulique, la solution injectée étant obtenue en refroidissant la solution saturée éjectée à une température au moins égale à la température ambiante jusqu'à la température de l'eutectique du sel avec la glace et en séparant ainsi de cette solution saturée éjectée une partie du sel, puis en y ajoutant de l'eau en une quantité compensant d'une part la différence entre la quantité d'eau injectée et celle éjectée et d'autre part la quantité d'eau séparée avec le sel.
La séparation des cristaux de sel s'effectue en refroidissant la solution saturée éjectée à une température au moins égale à la température ambiante, jusqu'à la température de l'eutectique avec la glace avant que la glace ne commence à se former, et en retirant de la solution les cristaux précipités, qui seront considérés directement comme une production s'ils sont exclusivement d'un des sels, ou sinon, qui seront remélangés à une quantité de saumure à réinjecter réchauffée, qui redissoudra totalement l'un des sels et donnera une saumure saturée, dont on retirera les cristaux restants de l'autre sel, et qui sera recyclée avec la saumure éjectée.

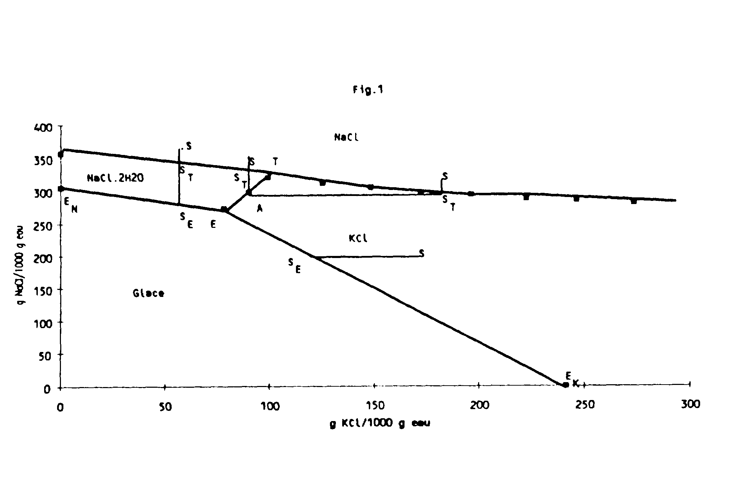

Ainsi, par exemple, pour une formation contenant de la sylvinite, soit un mélange de NaCl et KCl, on distingue, sur la figure 1 ci-jointe, 3 zones se rejoignant au point d'eutexie ternaire E à 273 g NaCl et 78 g KCl pour 1000 g eau, et excluant la zone de dépot de glace limitée par les lignes joignant le point E aux points d'eutexie E_{N} et E_{K} des saumures ne contenant respectivement que du NaCl et du KCl. Pour une saumure éjectée S à la température t à N g NaCl et K g KCl pour 1000 g eau:
1 - Si N < 273 : le refroidissement causera un dépôt exclusivement de KCl jusqu'à la température du point SE, saumure à N g NaCl et K_{E} g KCl pour 1000 g eau. On note que le KCl est un des rares sels à ne pas former de dihydrate. La production sera K - K_{E} g KCl.

Ainsi donc, on obtient du KCl à partir d'une formation contenant de la sylvinite avec une saumure éjectée dont la teneur en NaCl est inférieure à celle de l'eutectique ternaire avec la glace, soit 273 g NaCl pour 1000 g eau, en refroidissant cette saumure éjectée à une température au moins égale à la température ambiante, jusqu'à la température de l'eutectique avec la glace avant que la glace ne commence à se former, et en retirant de la solution les cristaux de KC1 précipités.
2 - Si K < 78 : le refroidissement causera un dépôt exclusivement de NaCl jusqu'à la température du point S_{T} de transition avec le dihydrate de chlorure de sodium NaCl.2H₂O, puis un dépôt de cet hydrate jusqu'à la température du point S_{E}, saumure à N_{E} g NaCl et K g KCl pour 1000 g eau. Cet hydrate séparé de la solution et réchauffé à la température du point S_{T} donne une saumure saturée de NaCl contenant des cristaux de NaCl. On peut séparer les cristaux de NaCl et recycler la saumure saturée avec la saumure sortie de puits. Dans ce cas, la production finale sera N - N_{E} g de NaCl.

Ainsi donc, on obtient du NaCl à partir d'une formation contenant de la sylvinite avec une saumure éjectée dont la teneur en KCl est inférieure à celle de l'eutectique ternaire avec la glace, soit 78 g KCl pour 1000 g eau, en refroidissant cette saumure éjectée à une température au moins égale à la température ambiante, jusqu'à la température du point S_{T} de transition avec le dihydrate de chlorure de sodium NaCl.2H₂O et en retirant de la solution les cristaux de NaCl précipités, puis jusqu'à la température de l'eutectique avec la glace avant que la glace ne commence à se former et en retirant de la solution les cristaux de NaCl.2H₂O précipités, en les réchauffant à la température du point S_{T} pour qu'ils donnent une saumure saturée de NaCl contenant des cristaux de NaCl, qui peut être considérée comme une production et expédiée telle quelle par canalisation vers une usine chimique, ou qui sera recyclée avec la saumure sortie de puits après en avoir retiré les cristaux de NaCl.
3 - Si N > 273 et K > 78 : le refroidissement causera un dépôt exclusivement de NaCl jusqu'à la température du point S_{T}, puis, si S_{T} se trouve à gauche du point de transition T, un dépôt de NaCl.2H₂O jusqu'au point A qu'on traitera comme précédemment au point 2, ou si S_{T} se trouve à droite du point de transition T, un dépôt de KCl et NaCl mélangés au passage de la ligne de solution saturée des 2 sels, suivi d'un dépôt exclusivement de KCl jusqu'au point A, puis un dépôt de NaCl.2H₂O et de KCl mélangés jusqu'à la température du point E, qui sera séparé et mélangé (avec éventuellement le mélange NaCl-KCl retiré au point S_{T}) à une quantité de saumure à réinjecter, réchauffée pour que le tout soit porté à la température du point S_{T}, qui redissoudra totalement l'un des sels, le NaCl pour S_{T} à gauche du point T, le KCl pour S_{T} à droite du point T, et donnera une saumure saturée à la température du point S_{T}, dont on retirera les cristaux restants de l'autre sel et qui sera recyclée avec la saumure éjectée. La production finale sera de N - 273 g NaCl et K - 78 g KCl pour 1000 g eau.

Ainsi donc on obtient du KCl et du NaCl à partir d'une formation contenant de la sylvinite avec une saumure éjectée dont les teneurs en KCl et NaCl sont supérieures à celles de l'eutectique ternaire avec la glace, soit 78 g KCl et 273 g NaCl pour 1000 g eau, en refroidissant cette saumure éjectée à une température au moins égale à la température ambiante, dans une première étape, jusqu'à la température du point S_{T} de transition et en retirant les cristaux de NaCl précipités, puis, dans une deuxième étape, jusqu'à la température du point A, et, si S_{T} se trouve à gauche du point de transition T, en retirant les cristaux de NaCl.2H₂O précipités qu'on traitera comme au point 2, ou si S_{T} se trouve à droite du point de transition T, en retirant les cristaux de KCl et NaCl mélangés au passage de la ligne de solution saturée de ces 2 sels, puis les cristaux de KCl, et dans une troisième étape jusqu'à la température de l'eutectique ternaire avec la glace avant que la glace ne commence à se former, et en retireant de la solution les cristaux de NaCl.2H₂O et de KCl précipités et en les mélangeant (avec éventuellement les cristaux de NaCl et de KCl retirés au point S_{T}) à une partie de la saumure à réinjecter, réchauffée pour que le tout soit porté à la température du point S_{T}, qui redissoudra totalement l'un des sels, le NaCl pour S_{T} à gauche du point T, le KCl pour S_{T} à droite du point T, et donnera une saumure saturée à la température du point S_{T}, dont on retirera les cristaux restants de l'autre sel et qui sera recyclée avec la saumure éjectée au point du circuit où elle aura atteint la température du point S_{T}.

Dans tous les cas, rien d'autre n'est extrait de la saumure éjectée, et donc du gisement, que du KCl et du NaCl séparés en cristaux (et éventuellement de la saumure saturée en NaCl), soient des produits de qualité commerciale, à l'exclusion de tout autre produit et notamment de rejets.

La seule énergie importante dépensée l'est au pompage de la chaleur qui, comme chacun sait, produit plus d'énergie qu'il n'en consomme, pour abaisser la température de la saumure des 4 ou 5 derniers degrés, le reste des transferts de chaleur se faisant dans des échangeurs à plaques entre la saumure éjectée que l'on refroidit en réchauffant la saumure à réinjecter. On utilisera des échangeurs à plaques en série, pour augmenter la vitesse de passage de la saumure saturée et éviter ainsi les bouchages, et des cyclones intercalés entre les échangeurs pour récupérer les cristaux supérieurs à une dimension donnée.

La solution réinjectée dans la cavité se saturera préférentiellement en KCl. En effet, le taux de dissolution des sels diminue à mesure que la concentration de la solution augmente, mais le taux de dissolution du KCl est plus important que celui du NaCl, et cette différence s'accroit à mesure que la concentration de la solution augmente, mais aussi lorsque la température augmente. Toutefois, le pourcentage de KCl dans la couche étant généralement plus faible que celui de NaCl, la dissolution en poids du KCl n'est supérieure à celle du NaCl qu'à partir du moment où, par exemple, la solution est déjà à 70% de sa saturation en NaCl lorsque la teneur en NaCl de la formation est le double de celle de KCl. Or, dans une formation de ce type, la solution réinjectée est à plus de 75% de sa saturation en NaCl.

Dans la pratique, pour une température d'injection donnée, on choisit le débit d'injection qui, en fonction des caractéristiques de la formation et de la cavité, permet juste d'obtenir la saturation à la température de sortie. On peut augmenter la température d'injection avec la chaleur produite au pompage de la chaleur et adapter le débit en conséquence. On a d'ailleurs intérêt à le faire lorsque beaucoup de sylvinite est exposée dans la cavité, et systématiquement en été au moins, et utiliser cette chaleur en hiver pour du chauffage d'immeubles par exemple. En effet, on éjectera alors une saumure saturée plus chaude avec des concentrations de NaCl et de KCl supérieures, et surtout de KCl puisqu'il se dissout beaucoup plus que le NaCl lorsque la température augmente, ce qui permet d'augmenter la capacité de production du KCl, tout en reconstituant la chaleur des terrains autour des cavités, ce que l'on peut assimiler à une forme de stockage de chaleur. Or, l'été coïncide avec la diminution ou l'arrêt de la demande pour le chauffage des immeubles et la plus forte demande de potasse au cours de l'année.

Les sels extraits à chaque cycle représentent dans le cas le plus typique environ 20% pour le NaCl et 65% pour le KCl des quantités contenues dans la saumure saturée, ce qui représente une différence essentielle avec les procédés où l'on traite la saumure pour essayer d'en extraire la quasi-totalité des sels, qui pourraient sembler préférables a priori parce que demandant un volume moindre d'injection. Mais, comme aux pertes de charge près, la pression d'injection est proportionnelle à la différence de densité des colonnes des puits d'injection et d'éjection, laquelle est beaucoup plus faible lorsqu'on injecte de la saumure plutôt que de l'eau douce, on peut dire en gros qu'on injecte x fois plus à une pression x fois moindre, et que le bilan énergétique pour la lixiviation est pratiquement le même. Par contre, il est extrêmement favorable au présent procédé pour la séparation des sels, qui a l'avantage supplémentaire d'obtenir directement des sels de qualité commerciale.

Mais, ce procédé de lixiviation avec une saumure proche de la saturation présente encore d'autres avantages essentiels, car il permet d'éviter la dissolution trop rapide autour du puits d'injection qui se produit avec l'injection d'eau ou de solutions à faibles concentrations de sels, et qui oblige parfois à utiliser une couche protectrice au toit, généralement de fuel, ce qui limite alors l'exploitation à des couches horizontales ou très faiblement pentées, ou bien à des couches de plusieurs dizaines de mètres d'épaisseur, ou bien encore à des couches surmontées d'un banc d'insolubles épais et résistant. Le présent procédé permet d'exploiter, sans l'utilisation de fluide protecteur au toit et tous ses inconvénients et coûts d'exploitation, toutes les couches salifères, et notamment tous les bancs potassiques, même d'épaisseur très faibles de quelques mètres comme c'est le plus souvent le cas, au sein des couches salifères, et quel que soit leur pendage.

Les principes de base de ce procédé s'appliquent aux gisements qui, outre la sylvinite, contiennent des bancs de carnallite (mélange hydraté de KCl et MgCl2). Le MgCl2 est très gênant dans les exploitations par lixiviation avec de l'eau douce parce qu'il se dissout beaucoup et très vite, empêchant pratiquement toute dissolution de NaCl et KCl. Par contre, dans le présent procédé qui utilise pour l'injection de la saumure à plus de 75% de la saturation en NaCl, le MgCl2 se dissout peu et de moins en moins alors que le KCl se dissout plus et de plus en plus. Lors du refroidissement, le KCl se dépose et le MgCl2 reste en solution pendant le dépôt du KCl et du dihydrate de chlorure de sodium, et sera réinjecté au fond. De très nombreux gisements potassiques contiennent de la carnallite, et beaucoup sont peu ou pas exploités. Le présent procédé permet de les exploiter.

De fait, les principes de base de ce procédé s'appliquent à tout gisement salifère.

On a pu remarquer que ce procédé s'applique à un gisement ne contenant que du NaCl (K=0 dans l'exemple ci-dessus), mais aussi à un gisement contenant un sel soluble en impureté même à teneur relativement importante, en fait jusqu'à la teneur égale à celle de l'eutectique ternaire (K<78 dans l'exemple ci-dessus). Ainsi donc on obtient par ce procédé du NaCl à partir d'une formation contenant du NaCl seul ou en très grande proportion au point que les autres sels ne constituent que des impuretés ou sont, en tous cas, à teneur inférieure dans la saumure éjectée à celle de l'eutectique ternaire avec la glace,

Ce procédé s'applique exactement de la même façon pour tout gisement d'un sel soluble dominant qui forme un hydrate en solution. C'est le cas, par exemple, du Na₂SO₄ qui forme du Na₂SO₄.H₂O à partir de 32°4 jusqu'à -1°2 (point eutectique avec la glace). Ainsi une solution saturée contenant 497 g de Na₂SO₄ pour 1000 g eau à 32°4 et seulement 34 g à -1°2 produira 463 g de Na₂SO₄ anhydre par ce procédé avec de l'ordre de 10 fois moins d'énergie que par les procédés actuellement utilisés.

Si le sel forme plusieurs hydrates depuis les hautes températures, on procèdera de la même façon en réchauffant les cristaux d'hydrate prélevés jusqu'à la température de transition du ou des précédents hydrates contenant moins d'eau, ce qui permettra d'extraire des cristaux contenant moins d'eau et diminuera les dépenses énergétiques pour obtenir le sel anhydre.

C'est le cas, par exemple, de Na₂CO₃ qui passe en solution saturée de Na₂CO₃.H₂O à Na₂CO₃.7H₂O à 35°4, puis de Na₂CO₃.7H₂O à Na₂CO₃.10H₂O à 32°, et dépose des cristaux de décahydrate jusqu'à -2°05. Ainsi une solution saturée contenant 498 g de Na₂CO₃ pour 1000 g eau à 35°4 et seulement 57,1 g à -2°05 produira 440,9 g de Na₂CO₃ contenu dans du monohydrate dont il faudra seulement extraire 440,9/106*18= 74,9 g eau.

C'est aussi le cas du Na₂B₄O₇ qui passe en solution saturée de Na₂B₄O₇.4H₂O à Na₂B₄O₇.10H₂O (borax) à 58°5 et dépose des cristaux du décahydrate jusqu'à -0°45. Ainsi une solution saturée contenant 169,9 g de Na₂B₄O₇ pour 1000 g eau à 58°5 et seulement 11,1 g à -0°45 produira 158,8 g de Na₂B₄O₇ contenu dans du tétrahydrate dont il faudra extraire 158,8/201,2*4*18= 56,8 g eau.

Ainsi donc on obtient un sel soluble à partir d'une formation contenant ce sel seul ou en très grande proportion au point que les autres sels ne constituent que des impuretés ou sont, en tous cas, à teneur inférieure dans la saumure éjectée à celle de l'eutectique avec la glace, ce sel étant obtenu anhydre s'il ne forme pas de dihydrate ou s'il commence à en former seulement au-dessous de 50° environ, ou bien hydraté avec le nombre d'H₂O correspondant à l'hydrate à environ cette même température.

Comme pour tous les sels, le mélange d'un de ces sels avec d'autres sels solubles dans leurs gisements donnent des saumures présentant des équilibres et des températures de transition différentes, dont ce sel seul constitue un cas limite, comme on l'a noté pour le mélange NaCl-KCl. Quelle que soit la configuration du système, et la composition de la saumure sortie de puits, les principes de ce procédé sont applicables. Ainsi, pour le mélange NaCl-Na₂SO₄, on pourrait faire exactement la même description que pour le mélange NaCl-KCl avec pour le point E (eutectique ternaire avec la glace à -21°7) 1,55 g Na₂SO₄ et 296,1 g NaCl pour 1000 g eau, et pour le point T 19,2 g Na₂SO₄ et 345,1 g NaCl pour 1000 g eau, sauf que Na₂SO₄ forme un hydrate et se comporte comme NaCl.

Ainsi donc on obtient du NaCl et un autre sel soluble à partir d'une formation contenant ces 2 sels en proportions importantes.

Il en serait de même pour un mélange Na₂SO₄-Na₂B₄O₇ avec pour le point E (eutectique ternaire avec la glace à -1°38) 40,05 g Na₂SO₄ et 6,6 g Na₂B₄O₇ pour 1000 g eau, et pour le point T 486,8 g Na₂SO₄ et 21,19 g Na₂B₄O₇ pour 1000 g eau.

Il en serait encore de même pour des mélanges qui pour de fortes concentrations forment un sel double qui sera traité de la même façon qu'un mélange de cristaux de sels. C'est le cas, par exemple, du mélange Na₂SO₄-Na₂CO₃ avec pour le point E (eutectique ternaire avec la glace à -2°45) 22,2 g Na₂SO₄ et 56,2 g Na₂CO₃ pour 1000 g eau, et pour le point T 277,6 g Na₂SO₄ et 299,7 g Na₂CO₃ pour 1000 g eau, et qui forme un sel Na₂CO₃.2Na₂SO₄ aux fortes concentrations.

Ainsi donc on obtient par ce procédé 2 sels solubles à partir d'une formation contenant ces 2 sels en proportions importantes.

A fortiori on pourra obtenir des sels solubles purs à partir de saumures naturelles ou provenant de rejets et on pourra également utiliser ce procédé pour épurer des saumures ou pour obtenir des solutions pures d'un sel.

## Revendications

1. Procédé d'obtention d'un sel choisi notamment parmi KCl, NaCl, Na₂SO₄, Na₂CO₃, Na₂B₄O₇, MgCl₂, MgSO₄, K₂SO₄ ou leurs mélanges, caractérisé en ce qu'il consiste à injecter une solution de ce sel dans un puits ménagé dans une formation contenant ce sel et à en éjecter une solution saturée par un autre puits ménagé dans la formation, ces 2 puits étant reliés par des méthodes connues, et préférentiellement par fracturation hydraulique, la solution injectée étant obtenue en refroidissant la solution saturée éjectée à une température au moins égale à la température ambiante, jusqu'à la température de l'eutectique du sel avec la glace et en séparant ainsi de cette solution saturée éjectée une partie du sel, puis en y ajoutant de l'eau en une quantité compensant d'une part la différence entre la quantité d'eau injectée et celle éjectée et d'autre part la quantité d'eau séparée avec le sel, la séparation des cristaux de sel s'effectuant en refroidissant la solution saturée éjectée à une température au moins égale à la température ambiante, jusqu'à la température de l'eutectique avec la glace avant que la glace ne commence à se former, et en retirant de la solution les cristaux précipités, qui seront considérés directement comme une production s'ils sont exclusivement d'un des sels, ou sinon, qui seront remélangés à une quantité de saumure à réinjecter réchauffée, qui redissoudra totalement l'un des sels et donnera une saumure saturée, dont on retirera les cristaux restants de l'autre sel, et qui sera recyclée avec la saumure éjectée.

2. Procédé d'obtention du KCl à partir d'une formation contenant de la sylvinite selon la revendication 1 avec une saumure éjectée dont la teneur en NaCl est inférieure à celle de l'eutectique ternaire avec la glace, soit 273 g NaCl pour 78 g KCl et 1000 g eau, caractérisé en ce qu'il consiste à refroidir cette saumure éjectée à une température au moins égale à la température ambiante, jusqu'à la température de l'eutectique ternaire avec la glace avant que la glace ne commence à se former, et en retirant de la solution les cristaux de KCl précipités.

3. Procédé d'obtention du NaCl à partir d'une formation contenant de la sylvinite selon la revendication 1 avec une saumure éjectée dont la teneur en KCl est inférieure à celle de l'eutectique ternaire avec la glace, soit 78 g KCl pour 273 g NaCl et 1000 g eau, caractérisé en ce qu'il consiste à refroidir cette saumure éjectée à une température au moins égale à la température ambiante, jusqu'à la température du point S_{T} de transition avec le dihydrate de chlorure de sodium NaCl.2H₂O et à retirer de la solution les cristaux de NaCl précipités, puis jusqu'à la température de l'eutectique ternaire avec la glace avant que la glace ne commence à se former et à retirer de la solution les cristaux de NaCl.2H₂O précipités, à les réchauffer à la température du point S_{T} pour qu'ils donnent une saumure saturée de NaCl contenant des cristaux de NaCl, qui peut être considérée comme une production et expédiée telle quelle par canalisation vers une usine chimique, ou qui sera recyclée avec la saumure sortie de puits après en avoir retiré les cristaux de NaCl.

4. Procédé d'obtention du KCl et du NaCl à partir d'une formation contenant de la sylvinite selon la revendication 1 avec une saumure éjectée dont les teneurs en KCl et NaCl sont supérieures à celles de l'eutectique ternaire avec la glace, soit 78 g KCl et 273 g NaCl pour 1000 g eau, caractérisé en ce qu'il consiste à refroidir cette saumure éjectée à une température au moins égale à la température ambiante, dans une première étape, jusqu'à la température du point S_{T} de transition avec le dihydrate de chlorure de sodium NaCl.2H₂O et à retirer les cristaux de NaCl précipités, puis, dans une deuxième étape, jusqu'à la température du point A, et, si S_{T} se trouve à gauche du point de transition T, à retirer les cristaux de NaCl.2H₂O précipités qu'on traitera selon la revendication 3, ou si S_{T} se trouve à droite du point de transition T, à retirer les cristaux de KCl et NaCl mélangés au passage de la ligne de solution saturée de ces 2 sels, puis les cristaux de KCl, et dans une troisième étape jusqu'à la température de l'eutectique ternaire avec la glace avant que la glace ne commence à se former, et à retirer de la solution les cristaux de NaCl.2H₂O et de KCl précipités et à les mélanger (avec éventuellement les cristaux de NaCl et de KCl retirés au point S_{T}) à une partie de la saumure à réinjecter, réchauffée pour que le tout soit porté à la température du point S_{T}, qui redissoudra totalement l'un des sels, le NaCl pour S_{T} à gauche du point T, le KCl pour S_{T} à droite du point T, et donnera une saumure saturée à la température du point S_{T}, dont on retirera les cristaux restants de l'autre sel et qui sera recyclée avec la saumure sortie de puits au point du circuit où elle aura atteint la température du point S_{T}.

5. Procédé selon la revendication 1 ou 2 ou 3 ou 4, pour une formation qui, outre la sylvinite, contient des bancs de carnallite (mélange hydraté de KCl et MgCl2) caractérisé en ce que l'on maintient une réinjection de saumure à plus de 75% de la saturation en NaCl dans laquelle le MgCl2 se dissout peu et de moins en moins alors que le KCl se dissout plus et de plus en plus, le MgCl2 restant, lors du refroidissement de la saumure saturée éjectée, en solution pendant le dépôt du KCl et du dihydrate de chlorure de sodium, et étant réinjecté au fond.

6. Procédé selon la revendication 1 ou 3 pour obtenir du NaCl à partir d'une formation contenant du NaCl seul ou en très grande proportion au point que les autres sels ne constituent que des impuretés ou sont, en tous cas, à teneur inférieure dans la saumure sortie de puits à celle de l'eutectique ternaire avec la glace,

7. Procédé selon la revendication 1 pour obtenir un sel soluble à partir d'une formation contenant ce sel seul ou en très grande proportion au point que les autres sels ne constituent que des impuretés ou sont, en tous cas, à teneur inférieure dans la saumure sortie de puits à celle de l'eutectique avec la glace, ce sel étant obtenu anhydre s'il ne forme pas de dihydrate ou s'il commence à en former seulement au-dessous de 50° environ, ou bien hydraté avec le nombre d'H₂O correspondant à l'hydrate à environ cette même température.

8. Procédé selon la revendication 1 ou 7 pour obtenir du NaCl et un autre sel soluble à partir d'une formation contenant ces 2 sels en proportions importantes.

9. Procédé selon la revendication 1 ou 7 pour obtenir 2 sels solubles à partir d'une formation contenant ces 2 sels en proportions importantes.

10. Procédé selon l'une quelconque des revendications précédentes pour produire des sels solubles purs à partir de saumures naturelles ou provenant de rejets ou pour épurer des saumures ou pour obtenir des solutions pures d'un sel.

## Patentansprüche

1. Darstellungsverfahren eines Salzes, ausgewählt vor allem unter KCl, NaCl, Na₂SO₄, Na₂CO₃, Na₂B₄O₇, MgCl₂, MgSO₄, K₂SO₄ oder ihren Mischungen, gekennzeichnet dadurch, daß es aus folgendem besteht: eine Lösung dieses Salzes in ein Bohrloch zu pressen, niedergebracht in einer Formation, die dieses Salz enthält und dann eine gesättigte Lösung durch ein anderes Bohrloch, niedergebracht in der Formation, auszustoßen, wobei diese beiden Bohrlöcher durch bekannte Methoden verbunden sind, der Methode der hydraulischen Zerklüftung wird hierbei der Vorzug gegeben; die eingepreßte Lösung durch Abkühlung der ausgestoßenen gesättigten Lösung zu erhalten, auf eine Temperatur mindestens gleich der Umgebungstemperatur, bis zur Temperatur des Eutektikums des Salzes mit dem Eis und dadurch einen Teil des Salzes aus dieser ausgestoßenen gesättigten Lösung abzutrennen, dann durch Hinzufügung von Wasser in einer Menge, die einerseits die Differenz zwischen der eingepreßten Wassermenge und der ausgeworfenen kompensiert und andererseits diejenige Wassermenge, die mit dein Salz abgetrennt wurde; die Abtrennung der Salzkristalle erfolgt dann durch Abkühlung der ausgestoßenen gesättigten Lösung auf eine Temperatur mindestens gleich der Umgebungstemperatur, bis zur Temperatur des Eutektikums mit dein Eis bevor das Eis sich zu bilden beginnt, und durch Abtrennung der aus der Lösung ausgeschiedenen Kristalle, welche direkt als ein Produkt angesehen werden, falls sie ausschließlich aus einem einzigen der Salze bestehen, oder, wenn nicht, werden sie mit einer Menge von Sole rückvermischt, die vorgewärmt wiedereinzupressen ist; die Sole wird eines der Salze vollständig wiederauflösen und wird eine gesättigte Sole ergeben, von welcher man die verbleibenden Kristalle des anderen Salzes abtrennt, und welche dann mit der ausgestoßenen Sole wiederverwertet wird.

2. Darstellungsverfahren von KCl, ausgehend von einer Formation die Sylvinit enthält, gemäß Patentanspruch 1, mit einer ausgestoßenen Sole, deren Gehalt an NaCl niedriger ist als der des ternären Eutektikums mit Eis, das heißt 273g NaCl auf 78g KCl und 1000g Wasser, gekennzeicnet dadurch, daß es aus folgendem besteht: diese ausgestoßene Sole abzukühlen auf eine Temperatur mindestens gleich der Umgebungstemperatur, bis zur Temperatur des ternären Eutektikums mit dem Eis bevor das Eis sich zu bilden beginnt und die aus der Lösung ausgeschiedenen KCI-Kristalle abzutrennen.

3. Darstellungsverfahren von NaCl, ausgehend von einer Formation die Sylvinit enthält, gemäß Patentanspruch 1, mit einer ausgestoßenen Sole, deren Gehalt an KCl niedriger ist als der des ternären Eutektikums mit Eis, das heißt 78g KCI auf 273g NaCl und 1000g Wasser, gekennzeicnet dadurch, daß es aus folgendem besteht: diese ausgestoßene Sole abzukühlen auf eine Temperatur mindestens gleich der Umgebungstemperatur, bis zur Temperatur des Übergangspunktes S_{T} mit Natriumchloriddihydrat (NaCl·2H₂O)) und die aus der Lösung ausgeschiedenen NaCl-Kristalle abzutrennen, dann bis zur Temperatur des ternären Eutektikums mit dein Eis bevor das Eis sich zu bilden beginnt und die aus der Lösung ausgeschiedenen NaCl·2H₂O-Kristalle abzutrennen, sie auf die Temperatur des Punktes S_{T} aufzuwärmen, damit sie eine mit NaCl gesättigte Sole ergeben, die NaCl-Kristalle enthält, die als ein Produkt angesehen werden kann und so wie sie ist, durch eine Rohrleitung zu einer chemischen Fabrik geschickt werden kann, oder die zusammen mit der aus dem Bohrloch austretenden Sole wiederverwertet wird nachdem die NaCl-Kristalle abgetrennt wurden.

4. Darstellungsverfahren von KCl und NaCl, ausgehend von einer Formation die Sylvinit enthält, gemäß Patentanspruch 1, mit einer ausgestoßenen Sole, deren Gehalte an KCl und NaCl höher sind als die des ternären Eutektikums mit Eis, das heißt 78g KCl und 273g NaCl auf 1000g Wasser, gekennzeichnet dadurch, daß es aus folgendem besteht: diese ausgestoßene Sole abzukühlen auf eine Temperatur mindestens gleich der Umgebungstemperatur, in einer ersten Etappe, bis zur Temperatur des Übergangspunktes S_{T} mit Natriumchloriddihydrat (NaCl·2H₂O) und die aus der Lösung ausgeschiedenen NaCl-Kristalle abzutrennen, dann, in einer zweiten Etappe, bis zur Temperatur des Punktes A und, wenn S_{T} sich links vom Übergangspunkt T befindet, die ausgeschiedenen NaCl·2H₂O-Kristalle abzutrennen, die dann entsprechend Patentanspruch 3 behandelt werden, oder, wenn S_{T} sich rechts vom Übergangspunkt T befindet, die vermischten KCl- und NaCl-Kristalle beim Überschreiten der Löslichkeitskurve dieser beiden Salze abzutrennen, dann die KCl-Kristalle, und in einer dritten Etappe bis zur Temperatur des ternären Eutektikums mit dem Eis bevor das Eis sich zu bilden beginnt und die aus der Lösung ausgeschiedenen NaCl·2H₂O- und KCI-Kristalle abzutrennen, und sie (eventuell mit den bei Punkt S_{T} abgetrennten NaCl- und KCl-Kristallen) mit einem Teil der wiedereinzupressenden Sole zu mischen, die erwärmt ist, damit das Ganze auf die Temperatur des Punktes S_{T} gebracht wird, wobei eines der Salze völlig aufgelöst wird, NaCl für S_{T} links vom Punkt T, KCl für S_{T} rechts vom Punkt T, und eine gesättigte Lauge bei der Temperatur des Punktes S_{T} ergeben wird, aus der die restlichen Kristalle des anderen Salzes abgetrennt werden, und das wiederverwertet werden wird mit der Sole, ausgetreten aus dem Bohrloch, an dein Punkt des Kreislaufs, wo sie die Temperatur des Punktes S_{T}erreicht haben wird.

5. Verfahren, gemäß Patentanspruch 1 oder 2 oder 3 oder 4, für eine Formation, die, außer Sylvinit Schichten von Karnallit (KMgCl₃·6H₂O) enthält, gekennzeichnet dadurch, daß man eine Wiedereinpressung einer Sole mit einer mehr als 75%-ige NaCl-Sättigung beibehält, in welcher sich MgCl₂ wenig löst und immer weniger, während KCl sich mehr löst und immer mehr; MgCl₂ bleibt bei der Abkühlung der ausgestoßenen gesättigten Lösung während der Ausscheidung von KCl und NaCl·2H₂O in Lösung, und wird dann in die Tiefe zurückgepreßt.

6. Verfahren, gemäß Patentanspruch 1 oder 3, zur Darstellung von NaCl, ausgehend von einer Formation, die nur NaCl enthält oder in einem sehr großen Ausmaß, so daß die anderen Salze nur Verunreinigungen darstellen oder, auf jeden Fall, einen niedrigeren Gehalt haben in der Sole, die aus dem Bohrloch austritt, als der des ternären Eutektikums mit dem Eis

7. Verfahren, gemäß Patentanspruch 1, zur Darstellung eines löslichen Salzes, ausgehend von einer Formation, die nur dieses Salz enthält oder in einem sehr großen Ausniaß, so daß die anderen Salze nur Verunreinigungen darstellen oder, auf jeden Fall, einen niedrigeren Gehalt haben in der Sole, die aus dein Bohrloch austritt, als der des ternären Eutektikums mit dem Eis. Dieses Salz wird wasserfrei erhalten, wenn es keine Dihydrate bildet oder diese nur bei einer Temperatur unterhalb von etwa 50° anfängt zu bilden, oder aber wasserhaltig, mit der Anzahl von H₂O-Molekülen, die dein Hydrat bei etwa eben dieser Temperatur entsprechen.

8. Verfahren, gemäß Patentanspruch 1 oder 7, zur Darstellung von NaCl und eines anderen löslichen Salzes, ausgehend von einer Formation, die diese beiden Salze in großem Umfang enthält.

9. Verfahren, gemäß Patentanspruch 1 oder 7, zur Darstellung von 2 löslichen Salzen, ausgehend von einer Formation, die diese beiden Salze in großem Umfang enthält.

10. Verfahren, gemäß irgendeines der oben aufgeführten Patentansprüche, zur Gewinnung von reinen löslichen Salzen, ausgehend von natürlichen Solen oder von Abgängen oder um Solen zu reinigen oder um reine Lösungen eines Salzes zu erhalten.

## Claims

1. A process for the production of a salt, in particular a salt selected from KCl, NaCl, Na₂SO₄, Na₂CO₃, Na₂B₄O₇, MgCl₂, MgSO₄, K₂SO₄ or mixtures thereof, comprising injecting a solution of said salt into a well provided in a formation containing said salt and ejecting a saturated solution via a further well provided in the formation, said 2 wells being connected by known methods, preferably by hydraulic fracturing, the injected solution being obtained by cooling the ejected saturated solution at a temperature which is at least equal to ambient temperature to the temperature of the salt eutectic with ice and thus separating a portion of the salt from said ejected saturated solution, then adding water thereto in a quantity which compensates firstly for the difference between the quantity of water injected and that ejected and secondly for the quantity of water separated with the salt, the separation of the salt crystals being carried out by cooling the saturated solution ejected at a temperature at least equal to the surrounding temperature, to the temperature of eutectic with ice before the ice begins to form, and removing from the solution precipated crystals, which will be considered directly as a production if they are exclusively of one of the salts, or if not, which will by re-mixed with a quantity of re-heated brine to be re-injected, which will completely re-dissolve one of the salts and yield a saturated brine from which the remaining crystals of the other salt can be extracted, and which will be recycled with the ejected brine.

2. A process according to claim 1 for the production of KCl from a formation containing sylvinite using an ejected brine which has a NaCl concentration which is lower than that of the ternary eutectic with ice, namely 273 g of NaCl per 78 g of KCl and 1000g of water, comprises cooling said brine ejected at a temperature which is at least equal to ambient temperature to the temperature of the ternary eutectic with ice before ice starts to form and removing precipitated KCl crystals from the solution.

3. A process according to claim 1 for the production of NaCl from a formation containing sylvinite using an ejected brine which has a KCl concentration which is lower than that of the ternary eutectic with ice, namely 78 g KCl per 273 g of NaCl and 1000 g of water, comprises cooling said brine ejected at a temperature which is at least equal to ambient temperature firstly to the temperature of the transition point S_{T} with sodium chloride dihydrate NaCl.2H₂O and removing precipitated NaCl crystals from the solution and then to the temperature of the ternary eutectic with ice before ice starts to form and removing precipitated NaCl.2H₂O crystals from the solution, reheating them to the temperature of the transition point S_{T} to produce an NaCl saturated brine containing NaCl crystals which can be regarded as production and conveyed as such by pipeline to a chemical plant or recycled with the brine leaving the well after removing the NaCl crystals.

4. A process according to claim 1 for the production of KCl and NaCl from a formation containing sylvinite using an ejected brine in which the KCl and NaCl concentrations are higher than those of the ternary eutectic with ice, namely 78 g of KCl and 273 g of NaCl per 1000g of water, comprises in a first step of cooling said brine ejected at a temperature which is at least equal to ambient temperature to the temperature of the transition point S_{T} with sodium chloride dihydrate NaCl.2H₂O and removing precipitated NaCl crystals, a second step of cooling said ejected brine to the temperature of the point A and, if S_{T} is to the left of the transition point T, removing precipitated NaCl, 2H₂O crystals which are treated in accordance with claim 3, or, if S_{T} is to the right of the transition point T, removing mixed KCl and NaCl crystals while traversing the saturated solution line for said two salts and then KCl crystals, and a third step of cooling said ejected brine to the temperature of the ternary eutectic with ice before ice begins to form, removing crystals of precipitated NaCl.2H₂O and KCl from the solution and mixing them (optionally with the NaCl and KCl crystals removed at the point S_{T}) with a portion of the brine for re-injection and reheating all of it to the temperature of the point S_{T}, in order to re-dissolve completely one of the salts (NaCl when S_{T} is to the left of the point T, KCl when S_{T} is to the right of the point T), producing a saturated brine at the temperature of the point S_{T} from which the remaining crystals of the other salt are removed and which is recycled with the brine leaving the well at the point in the circuit where it has reached the temperature of the point S_{T}.

5. A process according to claims 1, 2, 3 or 4 for a formation which, in addition to sylvinite, contains beds of carnallite, (a hydrated mixture of KCl and MgCl₂), wherein the brine of more than 75% NaCl saturation, in which MgCl₂ dissolves only slightly and in progressively decreasing amounts while the KCl dissolves to a greater extent and in progressively increasing amounts, is re-injected, the MgCl₂ remaining in solution during cooling of the ejected saturated brine and during precipitation of KCl and sodium chloride dihydrate and being re-injected into the borehole.

6. A process according to claim 1 or claim 3 for the production of NaCl from a formation containing NaCl alone or in such a high proportion that other salts constitute only impurities or are always in a concentration in the brine leaving the well which is lower than that of the ternary eutectic with ice.

7. A process according to claim 1 for the production of a soluble salt from a formation containing said salt alone or in such a high proportion that other salts constitute only impurities or are always in a concentration in the brine leaving the well which is lower than that of the ternary eutectic with ice, said salt being anhydrous if it does not form a dihydrate or if it begins to form a dihydrate only below a temperature of about 50° or hydrated with the amount of H₂O corresponding to the hydrate at about the same temperature.

8. A process according to claim 1 or 7 for the production of NaCl and another soluble salt from a formation containing high proportions of said two salts.

9. A process according to claims 1 or 7 for the production of two soluble salts from a formation containing high proportions of said two salts.

10. A process according to anyone of the preceding claims for the production of pure soluble salts from natural brines or from waste or for the purification of brines or for the production of pure solutions of a salt.
